# EUROPÄISCHE PATENTSCHRIFT

(11) **EP 1 451 908 B1**
(45) Veröffentlichungstag und Bekanntmachung des Hinweises auf die Patenterteilung: **19.04.2006**
(21) Anmeldenummer: 02804145.7
(22) Anmeldetag: 14.11.2002
(51) Int. Cl.: H02B 1/28

(54) **GEHÄUSE AUS FEUERHEMMENDEM MATERIAL**
HOUSING MADE OF FIRE-INHIBITING MATERIAL
LOGEMENT CONSTITUE D'UN MATERIAU IGNIFUGE

(30) Priorität: 27.11.2001 DE 10158040; 27.11.2001 DE 10158042
(43) Veröffentlichungstag der Anmeldung: 01.09.2004
(60) Teilanmeldung: 05105841.0
(73) Patentinhaber: Celsion Brandschutzsysteme GmbH, 63110 Rodgau (DE)
(72) Erfinder: SCHUBERT, Boris, 63110 Rodgau (DE)
(74) Vertreter: Flötotto, Hubert
(86) Internationale Anmeldenummer: PCT/DE2002/004210
(87) Internationale Veröffentlichungsnummer: WO 2003/049246

(56) Entgegenhaltungen:
- EP-A- 1 097 807
- DE-A- 10 023 337
- DE-A- 19 617 017
- DE-C- 19 902 971
- FR-A- 2 371 557

## Beschreibung

Die Erfindung betrifft ein Gehäuse aus feuerhemmendem Material mit einer Rückwand, zwei Seitenwänden, einer oberen Deckenwand und einer unteren Bodenwand sowie einer herausnehmbaren oder drehbar gelagerten Tür.

Ein solches Gehäuse ist aus der DE 199 02 971 Cl als Verteilergehäuse zur Aufnahme von elektronischen Schaltgeräten bekannt. Das Innere des Verteilergehäuses ist mit einer Brandschutzauskleidung versehen. In dem Verteilergehäuse ist ein Ausschnitt zum Einführen von Kabeln vorgesehen und der Ausschnitt ist mittels eines von der Außenseite der entsprechenden Seitenwand vorstehenden Kabeleinführungsaufsatzes abgedeckt.

Derartige Verteilergehäuse sollen in einem Brandfall den dabei auftretenden Temperaturen über einen Zeitraum von 30 bis 90 Minuten standhalten und die in dem Gehäuse befindlichen elektrischen Geräte schützen. Insbesondere soll eine Stromversorgung für eine Notbeleuchtung, für Brandmeldeanlagen, für Steuerungen, für Sprinkleranlagen und für Fahrstühle aufrechterhalten werden.

Aus der EP 1 097 807 A2 ist ein gebundenes Mineralwolleprodukt bekannt, das als Einlage für Feuerschutztüren und/oder Feuerschutzschränke verwendet werden soll. Treten während eines Brandes hohe Temperaturen auf, so sintert Mineralwolle zusammen und verliert ihre Wirksamkeit als Wärmedämmmaterial. Deshalb ist ein wasserabspaltender Stoff integriert zwischen Mineralwollefasern angeordnet.

Der Erfindung liegt die Aufgabe zugrunde, ein verbessertes Gehäuse anzugeben.

Diese Aufgabe wird gemäß der Merkmale des Anspruchs 1 gelöst. Erfindungsgemäß weist die Wand von innen nach außen gesehen eine innere wasserhaltige Schicht eine davor angeordnete äußere Faserschicht und eine äußere wasserhaltige Schicht auf. Im Brandfall werden Temperaturen von 1000°C bis 1200°C und auch darüber erreicht.

Die Hitze dringt in das Gehäuse ein und lässt die Temperatur innerhalb der wasserhaltigen Platte auf 100°C ansteigen. Das Wasser verdampft und dringt in die davor liegende faserhaltige Schicht ein. Da Wasserdampf bei Atmosphärendruck eine konstante Temperatur von 100°C aufweist, wird sowohl die wasserhaltige Schicht als auch die davor liegende äußere Faserschicht auf nicht mehr als 100°C aufgeheizt. Gegenüber den Temperaturen eines Brandherdes von 1000°C und darüber ist das auf 100°C aufgeheizte Verteilergehäuse gekühlt. Das bedeutet, dass auch der Innenraum des Verteilergehäuses eine Temperatur von nicht mehr als 100°C aufweist. Bei 100°C arbeiten elektrische Geräte noch einwandfrei. Über den Wassergehalt der wasserhaltigen Schicht wird die Verdunstungszeitdauer und damit die Durchlässigkeit der Wärme bestimmt. Der Wassergehalt dieser Schicht bestimmt also die Widerstandsfähigkeit des Verteilergehäuses und die Zeitdauer bis zum Ausfall der darin angeordneten Elektronik. Die Faserschicht wirkt als Isolationsschicht und das Fasermaterial ist eine Steinwollfaser mit einem Metalloxid-, insbesondere Aluminiumoxidanteil mit hohem Schmelzpunkt, also feuerhemmend.

In vorteilhafter Weise ist hinter der wasserhaltigen Schicht eine zweite innere Faserschicht angeordnet. Die Faserschicht wirkt ebenfalls als Isolationsschicht und das Fasermaterial ist ebenfalls eine Steinwollfaser mit einem Metalloxid-, insbesondere Aluminiumoxidanteil mit hohem Schmelzpunkt, also feuerhemmend.

In vorteilhafter Weise weist die innere faserhaltige Schicht eine höhere Dichte als die äußere faserhaltige Schicht auf. Damit ist sichergestellt, dass der Wasserdampf aus der wasserhaltigen Schicht in die äußere Faserschicht eindringt und dort die Temperatur auf 100°C absenkt.

In einfacher Weise weist die Schicht Platten auf. Damit ist ein einfacher Aufbau der einzelnen wasser- und faserhaltigen Schichten gewährleistet.

In einfacher Weise ist die Schicht als Matte und damit flexibel ausgebildet.

In vorteilhafter Weise erstreckt sich die Matte über einen inneren Umfang innerhalb der beiden Seitenwände, der oberen Deckenwand und der unteren Bodenwand. Damit ummantelt die flexible Matte die Platten der Wände und hält diese zusammen. Bei Hitzeeinwirkung schrumpft die Matte, drückt das Gehäuse zusammen und verschließt somit kleine Undichtigkeiten und / oder Fertigungstoleranzen.

In vorteilhafter Weise ist die Matte von einem Draht gehalten. Der Draht erstreckt sich über einen in den Wänden des Verteilergehäuses liegenden Umfang und durchdringt die Boden-, Decken- und beide Seitenwände. Die Matte ist von dem Draht umwickelt. Im Brandfall wird die Matte spröde. Der Draht greift die Matte über eine große Oberfläche an, ummantelt diese großflächig und hält die gesamte Konstruktion zusammen.

In einfacher Weise sind die wasserhaltigen Platten Gipsplatten. Diese sind feuerhemmend, einfach herstellbar, leicht zu bearbeiten und in eine gewünschte Form zu bringen.

In vorteilhafter Weise ist die äußere Gehäuseschicht eine Gipsplatte. Die Gipsplatte ist stabil und lässt sich in einfacher Weise mit den übrigen Platten des Gehäuses verschrauben. Die Schrauben verbinden die äußeren Gipsplatten untereinander, so dass keine Wärmebrücke in das Innere des Gehäuses ragt. Eine beschichtete Platte kann zu Dekorzwecken mit verschiedenen Beschichtungen versehen sein.

In vorteilhafter Weise ist eine Türschraube mittels einer Faserschicht abgedeckt. Damit ist eine in das Innere des Gehäuses ragende Wärmebrücke unterbrochen.

In vorteilhafter Weise ist die wasserhaltige Schicht zu einer senkrecht zur ersten angeordneten äußeren wasserhaltigen Schicht einer Nachbarwand beabstandet. Damit ist sichergestellt, dass im Brandfall eine Wärmeleitung unterbrochen ist und Wärme nicht direkt von einer Außenschicht der zweiten Wand aus auf die wasserhaltige Platte übertragen wird. Eine entstandene Lücke wird mit einer Faserschicht aufgefüllt.

In vorteilhafter Weise ist eine Kabeleinführung innerhalb der Wand versenkt, so dass die Kabeleinführung bündig mit den übrigen Gehäuseteilen abschließt.

In vorteilhafter Weise findet das Gehäuse Anwendung als Verteilergehäuse zur Aufnahme elektronischer Schaltgeräte und als Gehäuse zur Aufnahme und Sicherung von Akten- und Datenmaterial.

Zum besseren Verständnis der Erfindung wird nachstehend ein Ausführungsbeispiel anhand der Zeichnung näher erläutert.

Es zeigen
- Fig. 1: ein Verteilergehäuse in geschnittener Seitenansicht,
- Fig. 2: das Verteilergehäuse in Draufsicht und
- Fig. 3: einen Belüftungsschacht des Verteilergehäuses.

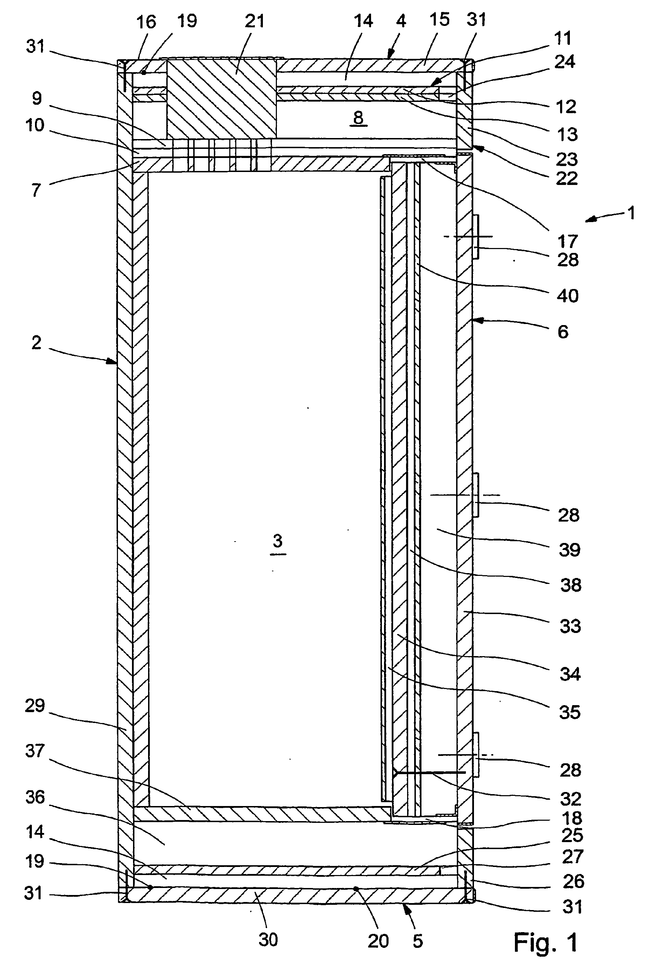

Figur 1 zeigt ein Verteilergehäuse 1 mit einer Rückwand 2, zwei Seitenwänden 3, einer oberen Deckenwand 4, einer unteren Bodenwand 5 und einer Tür 6. Die Deckenwand 4 weist von innen nach außen gesehen eine wasserhaltige Schicht 7, danach eine Fasermaterialschicht 8 mit Platten 9 und 10, des weiteren eine wasserhaltige Schicht 11 mit Platten 12 und 13, darauf folgend eine Faserschicht 14 und eine äußere wasserhaltige Schicht 15 mit einer Beschichtung 16 auf. Die äußere wasserhaltige Schicht 15 des Verteilergehäuses 1 ist von Holzfaser verstärkten und teilweise Glasfaser verstärkten Gipsplatten 15 gebildet. Die äußere Faserschicht 14 weist eine niedrigere Dichte als die innere Faserschicht 8 auf. Die Faserschicht 14 ist eine Fasermatte, die sich über einen inneren Umfang innerhalb der beiden Seitenwände 3, der oberen Deckenwand 4 und der unteren Bodenwand 5 erstreckt. Die geschlossene Tür 6 ist zwischen der oberen Deckenwand 4 und der unteren Bodenwand 5 eingebettet. Die Wände 4 und 5 begrenzen die geschlossene Tür 6. Zwischen den Wänden 4 und 5 und der Tür 6 sind Spalte 17 und 18 vorhanden.

Die Fasermatte 14, die sich einteilig in den Seitenwänden 3, der Deckenwand 4 und der Bodenwand 5 erstreckt, ist von Drähten 19 und 20 umwickelt, die sich somit ebenfalls über einen inneren Umfang des Verteilergehäuses 1 erstrecken und auf große Flächen der Matte 14 einwirken. Im Brandfall ist somit das gesamte Gehäuse von der Matte 14 und von den Drähten 19 und 20 zusammengehalten. Eine innere Platte 7 der wasserhaltigen Schicht 7 aus Gips verleiht dem Verteilergehäuse 1 eine innere Stabilität und dichtet den Innenraum gegen das Fasermaterial der Schicht 8 ab. Eine Kabeleinführung 21 ist in der oberen Deckenwand 4 eingebettet. Eine äußere an einer Frontseite 22 angeordnete Gipsplatte 23 der Wand 4 ist senkrecht zu den Platten 12, 13, 14, 15 und parallel der Tür 6 ausgerichtet und begrenzt die Wand 4. Die Gipsplatten 12 und 13 sind zu der an der Türseite 22 angeordneten Gipsplatte 23 beabstandet. Eine dabei entstehende Lücke 24 wird von Fasermaterial aufgefüllt. In der unteren Bodenwand 5 ist ebenfalls zwischen einer inneren Gipsplatte 25 und einer äußeren an der Frontseite 22 senkrecht zur ersten gelegenen weiteren Gipsplatte. 26 eine Lücke 27 vorgesehen, die mit Fasermaterial aufgefüllt ist und die einen Abstand zwischen den Gipsplatten 25 und 26 sicherstellt. Das Fasermaterial ist eine biolösliche Steinwollfaser mit einem Oxidanteil, insbesondere Na₂O; K₂O; CaO; MgO; BaO, Al₂O₃; SiO₂; ZrO₂. Der Metalloxidanteil bestimmt einen hohen Schmelzpunkt von 1050 - 1200°C. Die Tür 6 ist mittels Scharnieren 28 drehbar gelagert.

Die Rückwand 2 weist eine äußere Gipsplatte 29, die Bodenwand 5 eine äußere Gipsplatte 30 auf. Die äußeren Gipsplatten 15, 23, 26, 29 und 30 sind mittels Schrauben 31 untereinander verschraubt und gewährleisten so die Stabilität des Verteilergehäuses 1. Die Schrauben 31 sind so angeordnet, dass keine Wärmebrücke in das Innere des Gehäuses 1 führt. Eine Schraube 32 verbindet eine äußere Gipsplatte 33 mit einer inneren Gipsplatte 34 der Tür 6. Der Kopf dieser Schraube 32 ist mit einer Faserschicht 35 abgedeckt, so dass keine Wärme über die als Wärmebrücke wirkende Schraube 32 in das Innere des Gehäuses 1 gelangt. Die Bodenwand 5 weist hinter der Gipsplatte 25 eine weitere Faserschicht 36 und dahinter eine innere Gipsplatte 37 auf. Die aus Platten bestehende innere Faserschicht 36 weist eine höhere Dichte als die äußere Faserschicht 14 auf. In der Tür 6 weist eine hintere Faserschicht 38 dieselbe Dichte wie eine äußere Faserschicht 39 auf. Die beiden Faserschichten 38 und 39 sind als Platten ausgebildet und mittels einer Gipsplatte 40 voneinander getrennt.

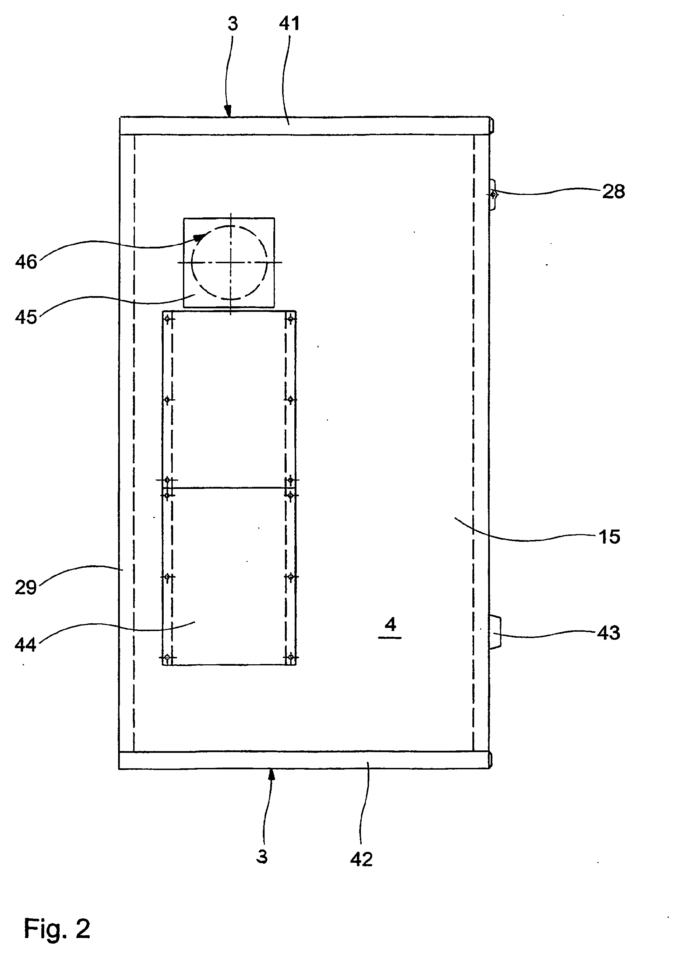

Figur 2 zeigt das Verteilergehäuse 1 mit den Gipsplatten 41, 42 der Seitenwände 3 und 4, der äußeren Gipsplatte 15 der Decke 4, den Scharnieren 28 der Tür 6, einen Türgriff 43 und die hintere äußere Gipsplatte 29 der Rückwand 2. Auf der Deckenwand 4 ist eine Abdeckung 44 angeordnet, unter der die Kabeleinführung 21 liegt. Neben der Abdeckung 44 ist ein Filter 45 angeordnet, unter dem ein Belüftungsschacht 46 liegt.

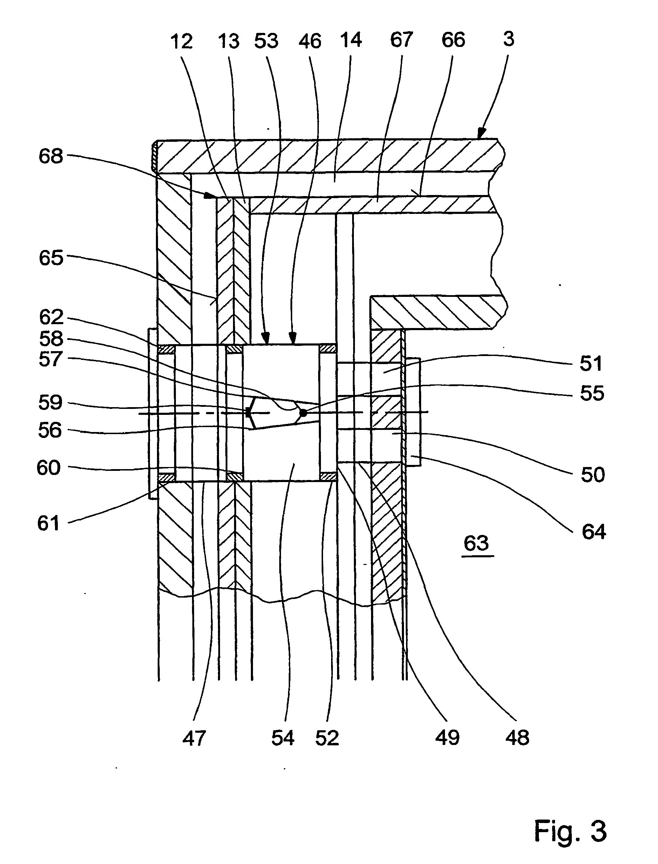

Figur 3 zeigt den Belüftungsschacht 46 innerhalb des Gehäuses 1. Der Belüftungsschacht 46 ist zweiteilig mit einem oberen Bereich 47 und einem unteren Bereich 48 aufgebaut. Die beiden Bereiche 47 und 48 sind durch eine Stufe 49 getrennt und der untere Bereich 48 weist Kanäle 50 und 51 auf. Auf der Stufe 49 sitzt ein Aufschäumring 52 auf. Über dem Aufschäumring 52 ist eine Absperrvorrichtung 53 mit einem Metallrohr 54, einem Mittenstab 55, zwei halbkreisförmigen Klappenflügeln 56 und 57, einer Feder 58 und einem Schmelzlot 59 angeordnet. Bei Überschreitung einer definierten Umgebungstemperatur von 72°C gibt das integrierte Schmelzlot 59 die Flügel 56 und 57 frei, die durch die Kraft der Feder 58 um den Mittenstab 55 eine viertel Umdrehung ausführen und das Metallrohr 54 schlagartig schließen. Auf dem Metallrohr 54 ist ein weiterer Aufschäumring 60 und an einem oberen Ende 61 des Belüftungsschachtes 46 ein dritter Aufschäumring 62 angeordnet. Die Aufschäummittel 52, 60 und 62 schäumen bei Hitzeeinwirkung im Brandfall auf, verschließen den Belüftungsschacht 46 und verhindern eine durch das Metallrohr 54 hergestellte Wärmebrücke in den Innenraum 63 des Verteilergehäuses 1. Im Innenraum 63 unterhalb der Kanäle 50, 51 ist ein Ventilator 64, im folgenden auch Lüfter genannt, angeordnet. Die Fasermatte 14 erstreckt sich über Oberflächen 65 und 66 der Platte 12 und einer weiteren Gipsplatte 67 der Wand 3 und über eine Ecke 68, die von der Platte 12 innerhalb der Wand 3 gebildet wird.

## Patentansprüche

1. Gehäuse (1) aus feuerhemmendem Material (7-15, 18, 23, 25, 26, 29, 30, 33-40) mit einer Rückwand (2), zwei Seitenwänden (3), einer oberen Deckenwand (4) und einer unteren Bodenwand (5) sowie einer herausnehmbaren oder drehbar gelagerten Tür (6), **dadurch gekennzeichnet, dass** die Wand (3, 4, 5) von innen nach außen gesehen eine innere wasserhaltige Schicht (11, 12, 13, 25, 40), eine davor angeordnete äußere faserhaltige Schicht (14, 18, 39) und eine äußere wasserhaltige Schicht (15, 30, 33) aufweist.

2. Gehäuse nach Anspruch 1, **dadurch gekennzeichnet, dass** hinter der wasserhaltigen Schicht (11, 12, 13, 25, 40) eine zweite innere faserhaltige Schicht (8, 9, 10, 36, 38) angeordnet ist.

3. Gehäuse nach Anspruch 1 und / oder 2, **dadurch gekennzeichnet, dass** die innere faserhaltige Schicht (8, 9, 10, 36) eine höhere Dichte als die äußere faserhaltige Schicht (14, 39) aufweist.

4. Gehäuse nach einem oder mehreren der vorhergehenden Ansprüche 1 bis 3, **dadurch gekennzeichnet, dass** die Schicht (8, 11, 25, 36, 38, 39, 40) eine Platte (9, 10, 12, 13, 25, 40) aufweist.

5. Gehäuse nach einem oder mehreren der vorhergehenden Ansprüche, **dadurch gekennzeichnet, dass** die Schicht (14) eine Matte (14) aufweist.

6. Gehäuse nach Anspruch 5, **dadurch gekennzeichnet, dass** sich die Matte (14) über einen inneren Umfang innerhalb der beiden Seitenwände (3), der oberen Deckenwand (4) und der unteren Bodenwand (5) erstreckt.

7. Gehäuse nach einem oder mehreren der vorhergehenden Ansprüche, **dadurch gekennzeichnet, dass** die Matte (14) von einem Draht (19, 20) gehalten ist.

8. Gehäuse nach einem oder mehreren der vorhergehenden Ansprüche, **dadurch gekennzeichnet, dass** die wasserhaltigen Platten (7, 12, 13, 15, 23, 25, 26, 29, 30, 33, 34, 37, 40) Gipsplatten (7, 12, 13, 15, 23, 25, 26, 29, 30, 33, 34, 37, 40) sind.

9. Gehäuse nach einem oder mehreren der vorhergehenden Ansprüche, **dadurch gekennzeichnet, dass** eine äußere Gehäuseschicht (15, 23, 26, 29, 30, 33) eine Gipsplatte (15, 23, 26, 29, 30, 33) aufweist.

10. Gehäuse nach einem oder mehreren der vorhergehenden Ansprüche, **dadurch gekennzeichnet, dass** die Platte (15, 23, 26, 29, 30) von zumindest einer Schraube (31) gehalten ist.

11. Gehäuse nach einem oder mehreren der vorhergehenden Ansprüche, **dadurch gekennzeichnet, dass** eine Türschraube (32) mittels einer Faserschicht (35) abgedeckt ist.

12. Gehäuse nach einem oder mehreren der vorhergehenden Ansprüche, **dadurch gekennzeichnet, dass** die wasserhaltige Schicht (11, 12, 13, 25) zu einer senkrecht zur ersten angeordneten äußeren Gehäuseschicht (23, 26) beabstandet ist.

13. Gehäuse nach einem oder mehreren der vorhergehenden Ansprüche, **dadurch gekennzeichnet, dass** eine Kabeleinführung (21) in der Wand (4) versenkt ist.

14. Gehäuse nach einem oder mehreren der vorhergehenden Ansprüche zur Aufnahme elektronischer Schaltgeräte.

15. Gehäuse nach einem oder mehreren der vorhergehenden Ansprüche zur Aufnahme von Datenmaterial.

## Claims

1. Housing (1) made of fire-inhibiting material (7-15, 18, 23, 25, 26, 29, 30, 33-40) having a back wall (2), two side walls (3), an upper top wall (4) and a lower bottom wall (5) as well as a removable or rotatably supported door (6), **characterised in that** the wall (3, 4, 5), when viewed from the inside to the outside, has an inner water-containing layer (11, 12, 13, 25, 40), an outer fibre-containing layer (14, 18, 39) disposed in front thereof and an outer water-containing layer (15, 30, 33).

2. Housing as claimed in Claim 1, **characterised in that** a second inner fibre-containing layer (8, 9, 10, 36, 38) is disposed behind the water-containing layer (11, 12, 13, 25, 40).

3. Housing as claimed in Claim 1 and/or 2, **characterised in that** the inner fibre-containing layer (8, 9, 10, 36) has a higher density than the outer fibre-containing layer (14, 39).

4. Housing as claimed in any one or more of the preceding Claims 1 to 3, **characterised in that** the layer (8, 11, 25, 36, 38, 39, 40) includes a board (9, 10, 12, 13, 25, 40).

5. Housing as claimed in any one or more of the preceding claims, **characterised in that** the layer (14) includes a mat (14).

6. Housing as claimed in Claim 5, **characterised in that** the mat (14) extends over an inner circumference inside the two side walls (3), the upper top wall (4) and the lower bottom wall (5).

7. Housing as claimed in one or more of the preceding claims, **characterised in that** the mat (14) is held by a wire (19, 20).

8. Housing as claimed in any one or more of the preceding claims, **characterised in that** the water-containing boards (7, 12, 13, 15, 23, 25, 26, 29, 30, 33, 34, 37, 40) are plaster boards (7, 12, 13, 15, 23, 25, 26, 29, 30, 33, 34, 37, 40).

9. Housing as claimed in any one or more of the preceding claims, **characterised in that** an outer housing layer (15, 23, 26, 29, 30, 33) has a plaster board (15, 23, 26, 29, 30,33).

10. Housing as claimed in any one or more of the preceding claims, **characterised in that** the board (15, 23, 26, 29, 30) is held by at least one screw (31)

11. Housing as claimed in any one or more of the preceding claims, **characterised in that** a door screw (32) is covered by means of a fibre layer (35).

12. Housing as claimed in any one or more of the preceding claims, **characterised in that** the water-containing layer (11, 12, 13, 25) is located at a distance from an outer housing layer (23, 26) disposed perpendicularly to the former.

13. Housing as claimed in any one or more of the preceding claims, **characterised in that** a cable inlet (21) is recessed in the wall (4).

14. Housing as claimed in any one or more of the preceding claims for receiving electronic switching devices.

15. Housing as claimed in any one or more of the preceding claims for receiving data material.

## Revendications

1. Logement (1) en matériau ignifuge (7-15, 18, 23, 25, 26, 29, 30, 33-40), comportant une paroi arrière (2), deux parois latérales (3), une paroi de recouvrement supérieure (4) et une paroi de fond inférieure (5), ainsi qu'une porte (6) amovible ou rotative, **caractérisé en ce que** la paroi (3, 4, 5), vue de l'intérieur vers l'extérieur, comprend une couche hydratée interne (11, 12, 13, 25, 40), une couche fibreuse externe disposée préalablement (14, 18, 39) et une couche hydratée externe (15, 30, 33).

2. Logement selon la revendication 1, **caractérisé en ce qu'**une seconde couche fibreuse interne (8, 9, 10, 36, 38) est disposée à l'arrière de la couche hydratée (11, 12, 13, 25, 40).

3. Logement selon la revendication 1 et/ou 2, **caractérisé en ce que** la couche fibreuse interne (8, 9, 10, 36) présente une épaisseur supérieure à celle de la couche fibreuse externe (14, 39).

4. Logement selon une ou plusieurs des revendications précédentes 1 à 3, **caractérisé en ce que** la couche (8, 11, 25, 36, 38, 39, 40) comprend une plaque (9, 10, 12, 13, 25, 40).

5. Logement selon une ou plusieurs des revendications précédentes, **caractérisé en ce que** la couche (14) comprend une natte (14).

6. Logement selon la revendication 5, **caractérisé en ce que** la natte (14) s'étend sur un périmètre interne à l'intérieur des deux parois latérales (3), de la paroi de recouvrement supérieure (4) et de la paroi de fond inférieure (5).

7. Logement selon une ou plusieurs des revendications précédentes, **caractérisé en ce que** la natte (14) est maintenue par un fil (19, 20).

8. Logement selon une ou plusieurs des revendications précédentes, **caractérisé en ce que** les plaques hydratées (7, 12, 13, 15, 23, 25, 26, 29, 30, 33, 34, 37, 40) sont des plaques de plâtre (7, 12, 13, 15, 23, 25, 26, 29, 30, 33, 34, 37, 40).

9. Logement selon une ou plusieurs des revendications précédentes, **caractérisé en ce qu'**une couche externe du logement (15, 23, 26, 29, 30, 33) comprend une plaque de plâtre (15, 23, 26, 29, 30, 33).

10. Logement selon une ou plusieurs des revendications précédentes, **caractérisé en ce que** la plaque (15, 23, 26, 29, 30) est maintenue par au moins une vis (31).

11. Logement selon une ou plusieurs des revendications précédentes, **caractérisé en ce qu'**une vis de porte (32) est recouverte au moyen d'une couche de fibres (35).

12. Logement selon une ou plusieurs des revendications précédentes, **caractérisé en ce que** la couche hydratée (11, 12, 13, 25) est séparée d'une couche externe du logement (23, 26) disposée perpendiculairement à la première.

13. Logement selon une ou plusieurs des revendications précédentes **caractérisé en ce qu'**une entrée de câble (21) est encastrée dans la paroi (4).

14. Logement selon une ou plusieurs des revendications précédentes pour la réception d'appareils de distribution électroniques.

15. Logement selon une ou plusieurs des revendications précédentes pour la réception de matériaux de données.
